# FASCICULE DE BREVET EUROPEEN

(11) **EP 2 974 851 B1**
(45) Date de publication et mention de la délivrance du brevet: **21.02.2018**
(21) Numéro de dépôt: 15173367.2
(22) Date de dépôt: 23.06.2015
(51) Int. Cl.: B29C 70/86, B64C 27/473, B29C 33/30

(54) **PROCÉDÉ DE FABRICATION D'UN LONGERON D'UNE PALE, ET UNE PALE**
HERSTELLUNGSVERFAHREN EINES HOLMS EINES FLÜGELS, UND FLÜGEL
A METHOD OF FABRICATING A SPAR FOR A BLADE, AND A BLADE

(30) Priorité: 18.07.2014 FR 1401625
(43) Date de publication de la demande: 20.01.2016
(73) Titulaire: Airbus Helicopters, 13725 Marignane Cedex (FR)
(72) Inventeur: AMARI, André, 60520 LA CHAPELLE EN SERVAL (FR); GAFFIERO, Jacques, 75017 PARIS (FR)
(74) Mandataire: Pouillot, Laurent Pierre Paul

(56) Documents cités:
- US-B1- 6 263 936

## Description

La présente invention concerne un procédé de fabrication d'un longeron d'une pale, le procédé de fabrication de la pale, et la pale obtenue.

Un giravion est muni d'au moins un moteur qui entraîne en rotation un rotor principal ayant pour but d'assurer la sustentation voire même la propulsion du giravion. Ce rotor principal comporte un moyeu portant une pluralité de pales.

Chaque pale comporte classiquement au moins un longeron s'étendant en envergure à partir du pied de la pale.

Lors de leur mouvement rotatif, les pales sont soumises à un torseur d'efforts. Par suite, les pales subissent un effort centrifuge ainsi que des efforts multiples et des moments de flexion et de torsion dus aux mouvements de la pale en battement et en traînée notamment.

Par suite, le longeron a notamment pour fonction de transmettre au moyeu les efforts subis par la pale, et en particulier la force centrifuge.

Un premier type de pale est équipé d'un longeron agencé au niveau du bord d'attaque de la pale. Ce longeron s'étend à partir du pied de la pale le long de l'envergure de la pale. On nomme ce type de longeron « longeron de bord d'attaque » par commodité dans la suite du texte.

Un tel longeron de bord d'attaque participe aussi à l'équilibrage statique en corde de cette pale.

De plus, le longeron de bord d'attaque tend à améliorer la résistance aux dommages provoqués suite à un impact entre le bord d'attaque et un objet.

Un deuxième type de pale est muni d'un longeron dénommé longeron réparti. Un tel longeron réparti consiste en un longeron de bord d'attaque qui est prolongé dans sa partie courante par deux parties disposées à plat respectivement sur l'intrados et l'extrados de la pale. Un longeron réparti comporte donc dans sa partie courante des sections en forme de 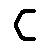 dans un plan transversal. Ce plan transversal est sensiblement parallèle l'axe de rotation du rotor et perpendiculaire à l'envergure de la pale.

Le longeron réparti comporte alors un bec massif de bord d'attaque. Ce bec est prolongé par une aile supérieure s'étendant au niveau de l'extrados de la pale et une aile inférieure s'étendant au niveau de l'intrados de la pale.

Outre les avantages d'un longeron de bord d'attaque, un longeron réparti tend à raidir la pale en battement.

De plus, un longeron réparti tend à optimiser la résistance de la pale en conférant à cette pale une résistance favorable en cas d'endommagement local.

Toutefois, il est délicat de relier une pale équipée d'un longeron réparti sur un moyeu de rotor.

Pour être relié à un moyeu, le longeron réparti d'une pale est par exemple enroulé au niveau de son emplanture autour d'au moins un axe vertical sensiblement parallèle à l'axe de rotation du rotor. La pale est alors fixée au rotor en insérant une broche s'étendant un tel axe vertical.

Toutefois, la fabrication d'un tel longeron réparti enroulé autour d'au moins une broche verticale peut être délicate.

Durant une première étape, un opérateur fabrique des rubans dénommés « roving ». Un tel ruban est réalisé en imprégnant dans de la résine des mèches de fibres de verre disposées côte à côte et calandrées suivant les dimensions du ruban désiré. Le ruban est assemblé avec un film séparateur, puis bobiné sur une bobine dénommée « galette ».

Le ruban de roving mis en oeuvre pour la fabrication des pales présente avant polymérisation ou consolidation une très bonne capacité de fluage. Cette capacité de fluage permet à un opérateur d'obtenir des évolutions de formes complexes par lissage manuel.

Durant une deuxième étape, un opérateur réalise des écheveaux élémentaires à l'aide de tronçons d'un ruban de roving. Chaque écheveau présente alors une pluralité de couches de rubans de roving.

Chaque écheveau élémentaire se présente sous la forme d'une longue boucle parfaitement enroulée autour d'un coin d'emplanture, l'écheveau ayant sensiblement des sections rectangulaires. Chaque écheveau a une forme de C dans un plan sensiblement orthogonal à l'axe de rotation du rotor. Ainsi, chaque écheveau comprend deux brins latéraux reliés par un fond accolé contre le coin d'emplanture. Un tel coin d'emplanture est une pièce allongée en matériaux composites qui est destinée à recevoir une douille de fixation.

Durant une troisième étape, un opérateur drape un revêtement sur une première demi-coquille d'un moule pour matérialiser l'intrados de la pale, et sur une deuxième demi-coquille du moule pour matérialiser l'extrados de la pale.

Les écheveaux sont alors présentés dans les demi-coquilles pour être lissés. Le fond d'emplanture des écheveaux n'est pratiquement pas repris par l'opérateur. Par contre, les deux brins des écheveaux sont manoeuvrés par l'opérateur pour être disposés suivant des positions préétablies le long de l'envergure de la pale.

Enfin, les écheveaux sont travaillés manuellement durant une opération de lissage afin de faire fluer la matière conformément aux évolutions de sections prédéfinies.

Les opérateurs utilisent, à des références de pales identifiées, des gabarits qui matérialisent la section de longeron à respecter afin de faire fluer les brins des écheveaux progressivement et le plus régulièrement possible.

La réalisation de la troisième étape s'avère délicate.

En effet, les formes du longeron sont relativement simples au niveau de la douille de fixation et de la partie courante de la pale. De manière simplifiée, les écheveaux s'étendent sensiblement verticalement au niveau de la douille de fixation et sensiblement horizontalement au niveau de l'intrados et de l'extrados. Par contre, la trajectoire suivie par chaque écheveau entre ces deux zones extrémales est complexe. Cette trajectoire est notamment vrillée dans une zone complexe dénommée « zone de raccordement ».

Il est de plus malaisé de disposer à plat sur l'extrados et l'intrados de la pale les fibres des écheveaux provenant de la section vrillée du longeron réparti.

Le vrillage dans la zone de raccordement peut alors conduire à une faible reproductivité de la forme, ainsi qu'une faible reproductivité des caractéristiques mécaniques et vibratoires d'une pale à une autre.

De plus, si des éléments de remplissage doivent être agencés dans la pale, ces éléments de remplissage seront de forme complexe et varieront d'une pale à l'autre puisque le vrillage du longeron n'est pas reproduit à l'identique. La fabrication des pales peut alors difficilement être automatisée.

Le document FR 2 918 347 propose une douille de fixation permettant un enroulement du longeron réparti non pas autour d'un axe vertical mais autour d'un axe horizontal.

Les documents FR 2 321 997, FR 2 030 036, EP 1 035 963, et FR 993491 sont éloignés de la problématique de l'invention.

Le document FR 2 321 997 dévoile un procédé de fabrication d'articles de section non circulaire par bobinage de filaments continus.

Ce procédé met en oeuvre un mandrin immobile contenant une enveloppe élastique. Le mandrin est gonflé afin d'atteindre une forme circulaire puis est mis en rotation. Des filaments continus sont alors bobinés autour du mandrin et enrobés d'une résine durcissable.

Le mandrin est ensuite dégonflé pour transformer le bobinage en une gaine déformable.

La gaine déformable est alors placée dans la cavité d'un moule. Un opérateur met ensuite en surpression l'intérieur de la gaine pour que le bobinage épouse la forme du moule. Cet opérateur provoque finalement le durcissement de la résine pour transformer la gaine en une structure creuse rigide.

Ce procédé de bobinage de fibres continues autour d'un mandrin immobile ne paraît pas adapté à un longeron réparti de pale.

Selon le document FR 2 030 036, un opérateur forme par bobinage un élément cylindrique qui constituera le revêtement extérieur de la pale. Cet élément cylindrique est ensuite subdivisé en deux sous-ensembles disposés chacun dans un moule.

Par ailleurs, le longeron de la pale est réalisé par bobinage.

Ce longeron comporte un premier bloc de couches de fibres présentant une angulation de 45° avec l'axe longitudinal de la pale, puis un deuxième bloc de couches de fibres présentant une angulation de 30° avec cet axe longitudinal, et enfin un troisième bloc de couches de fibres présentant une angulation de 15° avec l'axe longitudinal.

Le longeron débouchant sur l'extérieur au niveau du pied de la pale par une ouverture, une attache bobinée est coincée dans cette ouverture. Ensuite, le longeron est inséré entre les deux moules dans lesquels sont disposés les deux sous-ensembles du revêtement extérieur de la pale.

Ce procédé de fabrication est efficace mais paraît difficilement adapté à un longeron réparti. De plus, de multiples étapes sont mises en oeuvre.

Le document EP 1 035 963 décrit un système de commande pour un dispositif de placement de fibres. Ce document EP 1 035 963 ne fournit néanmoins aucun enseignement relatif à un longeron d'une pale.

La méthode du placement de fibres est une méthode alternative au bobinage d'un filament continu.

Le placement de fibres est un procédé de dépose de fibres, rubans, mèches ou autres renforts similaires, secs ou pré-imprégnés de résine, sur des surfaces de formes diverses. Ce placement est réalisé en mettant en oeuvre un dispositif pourvu d'une tête de placement mobile. La tête de placement assure donc le positionnement du produit utilisé sur une surface par contact mécanique direct sur cette surface. A cet effet, la tête de placement est animée par un système de déplacement, de type robot ou portique de positionnement, dont les degrés de liberté sont asservis suivant la géométrie de la surface à couvrir.

Le procédé de placement de fibres permet donc notamment de réaliser des surfaces de grandes dimensions et de faibles épaisseurs, dans les limites de l'encombrement de la tête de placement.

Notamment, le procédé de placement de fibres permet de réaliser automatiquement des opérations de dépose de fibres discontinues par le biais d'opérations d'amorçage, de dépose, et de découpe.

Le document FR 2 993 491 décrit une machine de placement de fibres.

On note que le placement d'un ruban de roving par le biais d'un système de placement peut être difficile. En effet, la matière déposée par les systèmes de placement sous forme de rubans tend à être visqueuse. Cette méthode offre alors peu de latitude à un opérateur pour lisser le ruban, ce qui peut paraître incompatible avec la réalisation d'un longeron.

En outre, l'encombrement des volumes balayés par une tête de placement ne parait pas compatible avec les volumes des demi-coquilles utilisées lors de la fabrication d'une pale selon le procédé décrit précédemment.

Enfin, un longeron présente des épaisseurs importantes contrairement aux pièces généralement fabriquées par placement de fibres.

De plus, un longeron présente selon son envergure des sections de nature très diverses. Dès lors, la fabrication d'un longeron en appliquant un procédé de placement de fibres paraît difficile à réaliser.

Le document US 6263936 est aussi connu.

Le document US 5181829 décrit une pale qui est reliée par un manchon à un moyeu. La pale est fixée au manchon par deux boulons. Ces deux boulons sont engagés dans une portion d'emplanture d'une pale. Le manchon est fixé au moyeu via quatre boulons.

L'invention a alors pour objet un procédé de fabrication d'un longeron d'une pale visant à fabriquer un longeron réparti d'une pale à l'aide d'un matériau composite.

L'invention concerne ainsi un procédé de fabrication d'un longeron d'une pale à l'aide de rubans en matériaux composites, ce longeron comportant transversalement au moins un arrangement, chaque arrangement étant à enrouler autour d'un axe d'emplanture.

Un arrangement représente donc un sous-ensemble du longeron enroulé autour d'un axe d'emplanture, et par suite d'une douille de fixation s'étendant le long de cet axe d'emplanture.

Dès lors, durant une étape de préparation, on définit un moule d'intrados et un moule d'extrados par arrangement à fabriquer, chaque moule comprenant une assise s'étendant longitudinalement selon l'envergure du longeron et définissant une surface de dépose incluant :
- une zone d'emplanture munie d'une paroi d'emplanture en forme de C qui entoure un axe d'emplanture, la paroi d'emplanture formant un fond prolongé par deux flancs,
- une zone de raccordement présentant deux parois de raccordement inclinées formant un V inversé et raccordées respectivement aux deux flancs
- une zone courante présentant deux parois courantes prolongeant respectivement les deux parois de raccordement.

Durant une étape de fabrication, chaque arrangement étant subdivisé en un sous-ensemble d'intrados et un sous-ensemble d'extrados comprenant chacun un écheveau, chaque écheveau comprenant une pluralité de tronçons de ruban en forme de U empilés les uns sur les autres, chaque moule comportant au moins un tiroir amovible dit « tiroir latéral » délimitant transversalement le moule en s'étendant verticalement à partir de l'assise et / ou au moins un tiroir amovible dit « tiroir longitudinal » délimitant longitudinalement ce moule en s'étendant verticalement à partir de l'assise :
- on enlève chaque tiroir de chaque moule,
- on fabrique le sous-ensemble d'intrados et le sous-ensemble d'extrados d'un arrangement respectivement sur le moule d'intrados et le moule d'extrados correspondant à l'arrangement, chaque sous-ensemble étant fabriqué en empilant des tronçons de ruban sur le moule correspondant par une méthode de placement de fibres à l'aide d'une tête de placement, cette tête de placement déposant ledit tronçon par dessus la surface de dépose dudit moule,
- on ferme chaque moule en agençant chaque tiroir du moule, et on accole les moules pour former une enceinte fermée dans laquelle se trouve les sous-ensembles.

Enfin, durant une étape de finalisation, on chauffe le longeron au sein desdits moules.

Ce procédé propose donc de définir deux moules pour chaque type d'arrangement. Ainsi, ce procédé met en oeuvre un moule d'intrados pour réaliser un écheveau de l'arrangement à agencer au niveau de l'intrados de la pale, et un moule d'extrados pour réaliser un écheveau de l'arrangement à agencer au niveau de l'extrados de la pale

Chaque moule comprend une assise définissant une surface de dépose.

Cette assise peut être usinée pour une surface de dépose permettant de conférer à l'arrangement la forme voulue. Toutefois, le moule peut à cet effet comprendre une assise relativement plane et un noyau reposant sur cette assise. Le noyau peut alors s'étendre longitudinalement le long de l'assise, partiellement ou totalement.

Pour favoriser la dépose d'un ruban, la surface de dépose présente une zone de raccordement ayant une géométrie particulière.

Ainsi, les parois de raccordement définissent une forme de V. cette forme de V est qualifiée par « inversée » dans le sens où la pointe du V se trouve à l'opposée de l'assise. Cette forme de V peut être tronquée, la pointe du V n'étant alors pas matérialisée.

Dès lors, les parois de raccordement des moules d'un arrangement confèrent à chaque arrangement une section sensiblement en forme de X.

En outre, afin de permettre la dépose d'un ruban sur un moule, chaque moule comporte au moins un tiroir. Chaque tiroir peut être qualifié de « tiroir de dégagement » dans la mesure où le tiroir permet d'autoriser le passage d'une tête de placement de fibres en son absence.

Chaque tiroir délimite ainsi le moule soit longitudinalement selon une direction allant du pied du longeron muni des douilles de fixation vers son extrémité libre, soit transversalement selon une direction allant du bord d'attaque de la pale à fabriquer vers son bord de fuite.

Durant l'étape de fabrication, les tiroirs des moules sont ainsi désolidarisés des assises de ces moules.

Dès lors, on fabrique successivement chaque sous-ensemble d'un arrangement sur son moule.

Par suite la tête de placement empile une succession de tronçons de ruban sur chaque moule.

Selon une variante, l'axe d'emplanture est un axe vertical sensiblement orthogonal à un plan d'extension en envergure du longeron. La zone d'emplanture est alors munie d'une paroi d'emplanture en forme de C qui entoure un axe d'emplanture, la paroi d'emplanture formant un fond prolongé par deux flancs verticaux séparés transversalement. Lors de la fabrication d'un sous-ensemble, la tête de placement enroule alors chaque tronçon de ruban du sous-ensemble autour d'un axe d'emplanture en déposant le tronçon par-dessus la surface de dépose dudit moule. Chaque tronçon est enroulé autour d'un axe vertical, de manière à présenter une forme en U.

En outre, la forme en V peut s'aplatir en s'éloignant de la zone d'emplanture.

Indépendamment de la variante, chaque moule définit ainsi clairement des trajectoires que peut suivre une tête de placement de fibres pour obtenir un longeron présentant des sections diverses.

Lorsque les tronçons de ruban d'un écheveau sont déposés, un opérateur ferme le moule en solidarisant les tiroirs adéquats à l'assise.

Ensuite, cet opérateur solidarise les moules les uns aux autres, puis chauffe l'ensemble du longeron. Ainsi, si les tronçons de ruban comportent une résine thermodurcissable, on polymérise le longeron en le chauffant. Si les tronçons de ruban comportent une résine thermoplastique, on consolide le longeron en le chauffant.

Dès lors, il devient possible de déposer des tronçons de ruban à l'aide d'une tête de placement montée sur le bras d'un robot.

Ce bras peut être translaté sur un bâti longitudinal parallèlement à une direction longitudinale d'extension d'un moule. De plus, la tête de placement de fibres est aussi inclinable par rapport au bras pour pouvoir faire le tour de la zone d'emplanture. Ainsi, la tête de placement de fibres présente au moins six degrés de liberté ce qui lui permet selon la variante de déposer chaque tronçon de ruban le long d'une trajectoire en U.

En outre, les tronçons de ruban trouvent un appui permanent sur l'assise ce qui facilite la dépose de ces tronçons. De plus, la trajectoire de ces tronçons reste accessible par la tête de placement de fibres, notamment en zone d'emplanture lorsque les tiroirs sont retirés.

La dépose des tronçons de ruban est donc réalisée intégralement et automatiquement, sur un moule, à l'extérieur du moule d'ensemble d'une pale, contrairement à certaines méthodes manuelles actuelles.

Par suite, les longerons obtenus par ce procédé peuvent alors être sensiblement identiques les uns aux autres.

De plus, ce procédé évite une phase de transfert délicate des écheveaux entre une zone de dépose et une zone de moulage. En effet, chaque écheveau est réalisé directement dans une partie du moule servant à la polymérisation ou à la consolidation du longeron.

Les mêmes outillages servent à la phase de support de placement de fibres dans un premier temps, puis dans un deuxième temps, à la phase de finalisation visant à polymériser ou à consolider le longeron suivant la nature des résines employées.

Ce procédé présente aussi l'avantage de pouvoir fabriquer un longeron massif au niveau de son bord d'attaque, à savoir un longeron présentant une épaisseur importante. Pourtant, la méthode de placement de fibres ne parait pas adaptée à une telle fabrication.

En effet, on verra par la suite que les moules d'un arrangement permettent d'obtenir des écheveaux susceptibles de donner naissance à un bord d'attaque massif.

En outre, ce procédé permet notamment de fabriquer un longeron réparti qui est creux dans sa partie courante.

De plus, ce procédé permet aussi de réaliser un longeron enroulé autour de deux goupilles verticales, selon la variante munie d'un axe d'emplanture vertical, ce qui parait incompatible avec le cheminement d'une tête de placement de fibres.

En effet, le procédé permet de réaliser un premier arrangement sur deux moules, et un deuxième arrangement sur deux autres moules. Les quatre moules sont alors accolés les uns aux autres préalablement à la polymérisation ou à la consolidation des arrangements.

La dépose des tronçons de ruban est alors effectuée en quatre passes respectivement sur quatre moules différents.

Ce procédé peut de plus comporter une ou plusieurs des caractéristiques qui suivent.

Selon une réalisation, au moins un moule comporte un noyau amovible reposant sur un siège dudit moule pour matérialiser au moins partiellement l'assise du moule.

Le noyau est alors un outillage enlevé suite à la polymérisation ou à la consolidation du longeron par exemple.

Alternativement, au moins un moule comporte une assise munie d'un siège et d'un noyau inamovible du longeron, ce noyau inamovible étant formé d'une douille de fixation, d'un coin d'emplanture entourant la douille de fixation et d'un matériau de remplissage du longeron.

Au moins une partie de la surface de dépose d'un moule est matérialisée par des pièces élémentaires réelles qui feront partie de la pale. Ces pièces élémentaires incluent par exemple une douille de fixation complète, un coin d'emplanture qui prolonge la douille, et un matériau de remplissage « léger » s'étendant en envergure à partir du coin d'emplanture. Un tel matériau de remplissage peut être une mousse de type polyuréthane par exemple.

Selon cette variante, un opérateur dispose les pièces élémentaires du noyau sur le moule.

Cet opérateur commande alors la tête de placement pour déposer les tronçons de ruban constituant l'écheveau à fabriquer.

Par ailleurs, le ruban comporte des fibres de renfort et un élément de liaison sous forme de résine thermoplastique ou thermodurcissable, ou sous forme de poudre de résine adhésive. Le ruban peut ainsi comporter des fibres de verre, et/ou de carbone, et/ou de basalte et une résine époxy, phénolique, polyester, polyuréthane, PEEK ou PEI, ou un élément de liaison des fibres sous la forme d'une poudre ou d'un liquide adhésif ou de liens thermoplastiques.

En fonction de la capacité de fluage du ruban, un opérateur peut éventuellement réaliser une opération de lissage ponctuelle après la dépose des tronçons, afin de finaliser la réalisation de sections complexes.

Par ailleurs, le longeron peut comprendre deux arrangements enroulés respectivement autour de deux axes d'emplanture, par exemple verticaux.

Ainsi, ce longeron comporte un arrangement dit « arrangement de bord de fuite » et un arrangement dit « arrangement de bord d'attaque ».

Durant l'étape de préparation, on définit alors un moule d'intrados de bord d'attaque et un moule d'extrados de bord d'attaque pour la réalisation de l'arrangement de bord d'attaque, ainsi qu'un moule d'intrados de bord de fuite et un moule d'extrados de bord de fuite pour la réalisation de l'arrangement de bord de fuite.

Par conséquent, avant l'étape de finalisation, on accole latéralement le moule d'intrados de bord d'attaque au moule d'intrados de bord de fuite, on accole latéralement le moule d'extrados de bord d'attaque au moule d'extrados de bord de fuite, on accole en élévation le moule d'extrados de bord de fuite au moule d'intrados de bord de fuite, on accole en élévation le moule d'extrados de bord d'attaque au moule d'intrados de bord d'attaque. L'ensemble ainsi constitué peut être chauffé afin de réaliser la phase de finalisation du longeron.

L'enceinte de fabrication du longeron est donc séparée en quatre moules, chaque moule permettant de fabriquer un écheveau du longeron. Ainsi, le moule d'intrados de bord d'attaque, le moule d'extrados de bord d'attaque, le moule d'intrados de bord de fuite et le moule d'extrados de bord de fuite permettent de réaliser respectivement un écheveau d'intrados de bord d'attaque, un écheveau d'extrados de bord d'attaque, un écheveau d'intrados de bord de fuite et un écheveau d'extrados de bord de fuite.

Outre un procédé de fabrication d'un longeron, l'invention vise un procédé de fabrication d'une pale. Durant ce procédé,
- on fabrique un longeron en appliquant le procédé précédemment décrit,
- on fabrique un moule d'ensemble de la pale,
- on agence le longeron dans le moule d'ensemble,
- on agence le moule d'ensemble dans un moyen de chauffage pour finaliser la pale en la chauffant.

Le moule de la pale est dénommé « moule d'ensemble » afin d'être distingué des moules du longeron.

Chaque sous-ensemble d'un longeron est ainsi réalisé dans un moule spécifique distinct du moule d'ensemble de la pale.

L'invention concerne de plus une pale munie d'au moins un longeron voire d'une douille de fixation, ce longeron comportant un arrangement apte à être enroulé autour de cette douille de fixation, cet arrangement comprenant un sous-ensemble d'intrados et un sous-ensemble d'extrados, cet arrangement s'étendant en envergure en comprenant successivement une zone d'emplanture au niveau de la douille de fixation, une zone de raccordement puis une zone courante.

Chaque section dite « section de raccordement » dudit arrangement dans la zone de raccordement a une forme de X, ledit sous-ensemble d'intrados ayant une forme de V retourné et ledit sous-ensemble d'extrados ayant une forme V dans ladite section de raccordement.

Le terme « retourné » est à considérer selon le regard d'un observateur observant le longeron selon son envergure, le sous-ensemble d'extrados étant situé à l'aplomb du sous-ensemble d'intrados.

Cette particularité permet de réaliser la pale en utilisant le procédé de placement de fibres décrit précédemment.

La pale peut alors comporter un arrangement de bord d'attaque et un arrangement de bord de fuite. Chaque arrangement peut posséder une section de raccordement en forme de X. Toutefois, un seul arrangement peut présenter une telle forme.

Par ailleurs, ledit axe d'emplanture étant un axe vertical sensiblement orthogonal à un plan d'extension en envergure du longeron, chaque section dite « section d'emplanture » dudit arrangement dans la zone d'emplanture peut comporter au moins une tranche s'étendant en élévation selon sa longueur.

A l'inverse, chaque section dite « section courante » dudit arrangement dans la zone courante comporte au moins une tranche s'étendant transversalement selon sa longueur.

Chaque tranche s'étend selon une longueur et une largeur. La longueur d'une tranche d'un longeron représente alors la plus grande dimension de cette tranche.

L'invention et ses avantages apparaîtront avec plus de détails dans le cadre de la description qui suit avec des exemples donnés à titre illustratif en référence aux figures annexées qui représentent :
- la figure 1, une vue schématique de dessus d'une pale muni d'un axe d'emplanture vertical obtenue en appliquant le procédé selon l'invention,
- les figures 2 à 4, des coupes schématiques transversales de ladite pale,
- la figure 5, une vue schématique d'un système de placement de fibres selon l'invention,
- la figure 6, un schéma présentant un longeron et des coupes d'un moule de fabrication dudit longeron,
- la figure 7, un schéma présentant des tiroirs d'un moule
- la figure 8, un schéma explicitant l'accolement de moules,
- la figure 9, un schéma explicitant la fabrication d'une pale, et
- la figure 10, une vue de dessus et en coupe d'une pale muni d'un axe d'emplanture horizontal obtenue en appliquant le procédé selon l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversale » est relatif à toute direction parallèle à la deuxième direction Y. La corde de la pale fabriquée s'étend transversalement alors que l'envergure de la pale s'étend longitudinalement.

Enfin, la troisième direction Z est dite en élévation. L'expression « en élévation » est relative à toute direction parallèle à la troisième direction Z.

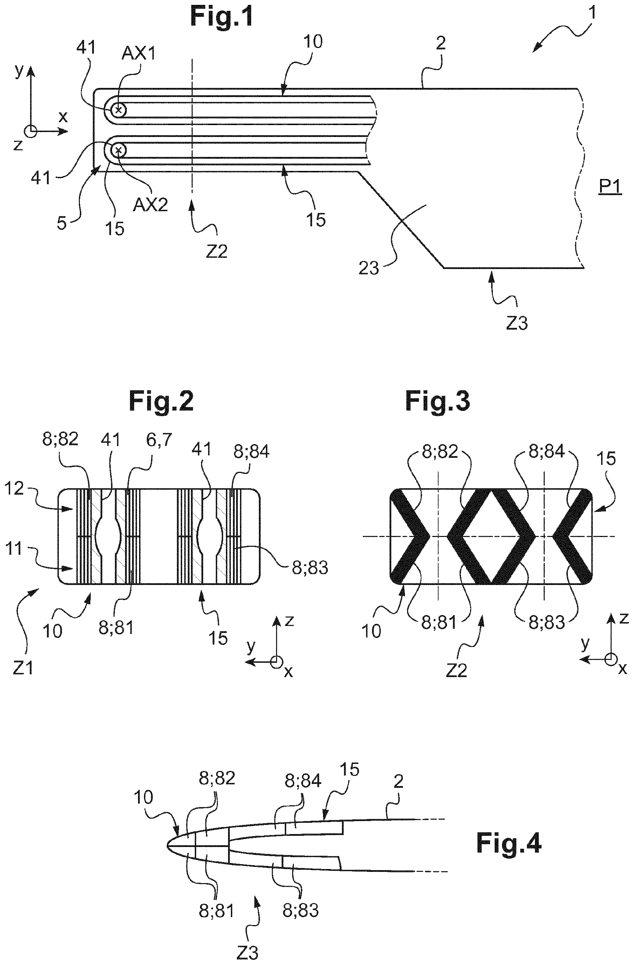

La figure 1 présente une pale 1 fabriquée en appliquant le procédé selon l'invention.

Cette pale 1 comporte un revêtement extérieur 2 dans lequel s'étend un longeron 5.

Ce longeron 5 s'étend donc longitudinalement le long de l'envergure de la pale 1 dans un plan d'extension en envergure P1, transversalement selon des cordes de la pale 1, et en élévation selon l'épaisseur de la pale 1.

Chaque section de la pale 1 est alors une section transversale parallèle à la deuxième direction Y et à la troisième direction Z.

Ce longeron 5 entoure au moins une douille de fixation 41. Ainsi, le longeron 5 comporte un arrangement 10, 15 par douille de fixation. Chaque arrangement est alors enroulé autour d'un axe d'emplanture AX1, AX2 de symétrie d'une douille de fixation 41. Selon la réalisation de la figure 1, un tel axe d'emplanture est un axe vertical AX1, AX2 sensiblement orthogonal au plan d'extension en envergure P1.

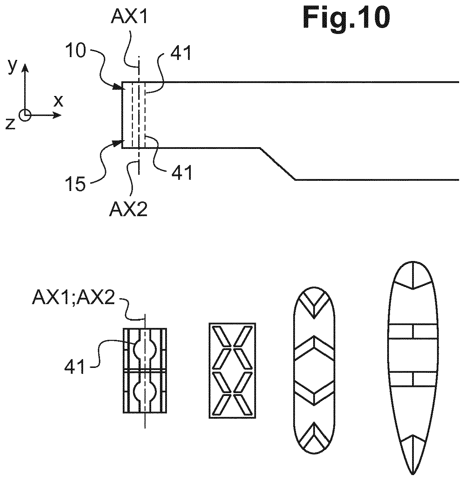

Toutefois et en référence à la figure 10, l'axe d'emplanture peut être un axe horizontal sensiblement inscrit dans le plan d'emplanture P1.

En référence à la figure 1, la pale peut comporter deux douilles de fixation 41. Dès lors, le longeron 5 comporte un arrangement dénommé par commodité « arrangement de bord d'attaque 10 » qui entoure la douille de fixation la plus proche du bord d'attaque de la pale en étant enroulé autour d'un premier axe d'emplanture AX1. De plus, le longeron 5 comprend un arrangement dénommé « arrangement de bord de fuite 15 » qui entoure la douille de fixation la plus proche du bord de fuite de la pale en étant enroulé autour d'un deuxième axe d'emplanture AX2.

Les figures 2 à 4 présentent des sections de la pale respectivement dans une zone d'emplanture Z1, une zone de raccordement Z2, et une zone courante Z3.

Chaque arrangement peut par exemple comprendre un sous-ensemble d'intrados 11 et un sous-ensemble d'extrados 12. Chaque sous-ensemble peut de plus comporter un unique écheveau.

Par suite, chaque arrangement possède éventuellement un unique écheveau d'intrados et un unique écheveau d'extrados. Dès lors, l'arrangement de bord d'attaque comporte un écheveau dit « écheveau d'intrados de bord d'attaque 81 » et un écheveau dit « écheveau d'extrados de bord d'attaque 82 ». De même, l'arrangement de bord de fuite comporte un écheveau dit « écheveau d'intrados de bord de fuite 83 » et un écheveau dit « écheveau d'extrados de bord de fuite 84 ».

Les figures 1 à 4 explicitent une première réalisation.

En référence à la figure 2, une section d'un écheveau 81, 82, 83, 84 d'un arrangement prend sensiblement dans la zone d'emplanture Z1 la forme de deux rectangles. La longueur de chaque rectangle s'étend sensiblement parallèlement à l'axe d'emplanture correspondant.

Chaque écheveau comporte un empilement de tronçons de ruban. Toutefois, la figure 1 détaille uniquement un écheveau pour ne pas être alourdie inutilement.

Par contre et en référence à la figure 3, chaque section d'un arrangement prend sensiblement la forme en >< d'un sablier dans la zone de raccordement Z2, cette forme en sablier s'aplatissant en s'éloignant de la zone d'emplanture.

Dès lors, chaque écheveau 81, 82, 83, 84 d'un arrangement prend sensiblement une forme en V dans la zone courante Z3. Cette forme en V tend alors à présenter une pointe 81, 82, 83, 84 dirigée vers le centre du longeron. Suivant la section et la représentation de la figure 3, cette forme en V est tronquée en ne présentant pas la pointe du V.

Enfin et en référence à la figure 4, chaque section d'un écheveau 81, 82, 83, 84 d'un arrangement a une forme aplatie sensiblement horizontale dans la zone courante Z3.

De plus, l'arrangement de bord d'attaque est massif en présentant un écheveau d'intrados de bord d'attaque 81 accolé à un écheveau d'extrados de bord d'attaque 82. Par contre, l'arrangement de bord de fuite 15 comporte un écheveau d'intrados de bord de fuite 83 séparé verticalement d'un écheveau d'extrados de bord de fuite 84.

La section du longeron dans la zone courante Z3 a alors une forme en C.

Selon la réalisation de la figure 10, chaque section d'un écheveau 81, 82, 83, 84 d'un arrangement a une forme aplatie sensiblement verticale dans la zone courante Z3

Un tel longeron 5 et une telle pale 1 peuvent être fabriqués de manière automatisée en appliquant le procédé selon l'invention.

Ce procédé vise à fabriquer le longeron à partir d'au moins un ruban de matériaux composites en utilisant une tête de placement de fibres.

Ce ruban peut comporter des renforts sous forme de fibres et une matrice sous forme de résine.

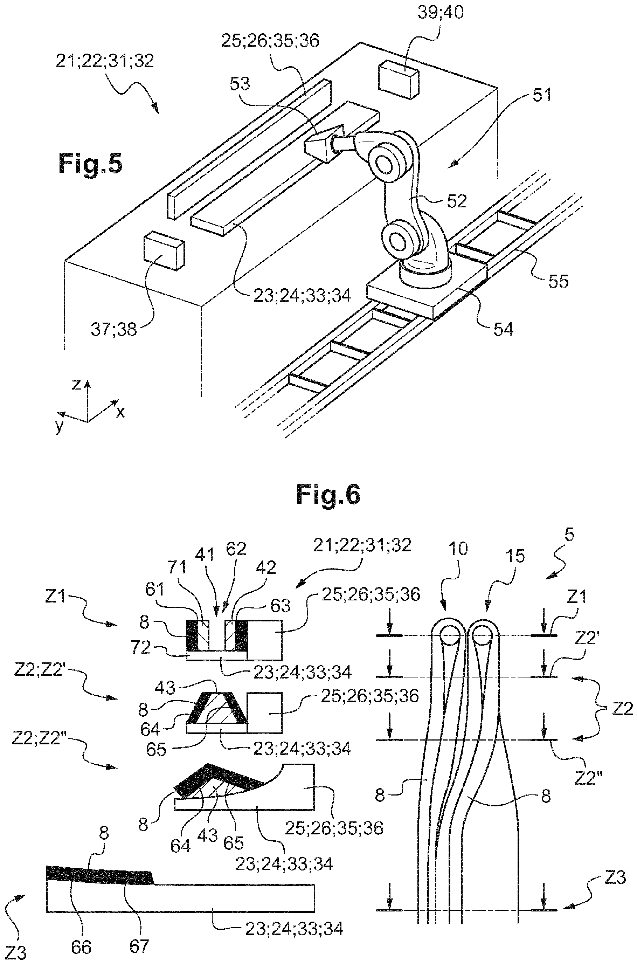

En référence à la figure 5, ce procédé met en oeuvre un système muni d'un robot 51. Le robot 51 est muni d'un bras articulé 52 monté sur un chariot 54 coulissant sur des rails 55. De plus, le robot 51 comprend une tête de placement de fibres 53 permettant de déposer des tronçons d'un ruban en matériaux composites sur un support. Un tel tronçon est dénommé « tronçon de ruban » par commodité.

La tête de placement comporte alors six degrés de liberté au moins, à savoir au moins trois degrés de liberté en translation et trois degrés de liberté en rotation.

De plus, le chariot confère à la tête de placement de fibres 53 une capacité de déplacement de plusieurs mètres selon un axe correspondant à l'envergure de la pale. La tête de placement de fibres 53 peut permettre de déposer un ruban d'une largeur de 20 millimètres environ, par exemple

Le robot 51 est asservi par un automate pour que la tête de placement dépose les rubans selon les trajectoires mémorisées. Cet automate comporte une unité de traitement munie d'un calculateur et d'une mémoire, le calculateur exécutant des instructions mémorisées sous forme de lignes de code dans la mémoire pour appliquer le procédé selon l'invention. Par exemple, l'unité de traitement est un ordinateur.

Ce système permet alors de fabriquer une pale.

Selon ce procédé, le longeron est fabriqué en mettant en oeuvre une méthode de placement de fibres à l'aide du robot 51.

Dès lors, durant une étape de préparation STP1, un constructeur définit un moule 21, 22, 31, 32 par écheveau 8.

Par conséquent, ce constructeur définit la géométrie d'un moule d'intrados 22, 32 et d'un moule d'extrados 21, 31 par arrangement 10, 15 durant l'étape de préparation STP1.

Pour réaliser la pale de la figure 1, le constructeur peut alors définir un moule d'intrados de bord d'attaque 22 et un moule d'extrados de bord d'attaque 21 ainsi qu'un moule d'intrados de bord de fuite 32 et un moule d'extrados de bord de fuite 31.

Chaque moule 21, 22, 31, 32 comporte une assise 23, 24, 33, 34 reposant sur une table par exemple.

De plus, chaque moule 21, 22, 31, 32 peut comporter au moins un tiroir dénommé tiroir latéral 25, 26, 35, 36. Chaque tiroir latéral délimite transversalement le moule 21, 22, 31, 32 en s'étendant verticalement à partir de l'assise 23, 24, 33, 34. Un tiroir latéral peut s'étendre longitudinalement partiellement le long de l'assise ou selon toute la longueur de cette assise.

De plus, chaque moule peut comporter au moins un tiroir dit « tiroir longitudinal » délimitant longitudinalement le moule en s'étendant verticalement à partir de l'assise.

Les tiroirs sont amovibles pour permettre à la tête de placement de déposer des tronçons de ruban.

Dès lors et en référence à la figure 6, chaque moule définit une surface de dépose sur laquelle des tronçons de ruban doivent être empilés. Cette figure 6 est plus spécifiquement dédiée à la première réalisation des figures 1 à 4. Néanmoins, son enseignement est transposable à la deuxième réalisation.

Pour faciliter la représentation d'un moule, la figure 6 présente à sa droite un longeron 5, et à sa gauche quatre sections d'un moule et en particulier du moule d'intrados de bord de fuite.

Ainsi, chaque moule présente dans la zone d'emplanture Z1 une paroi d'emplanture 61 sensiblement verticale en forme de C.

La paroi d'emplanture forme alors un fond 62 arrondi prolongé par deux flancs verticaux 63.

Dans la zone de raccordement Z2, chaque moule présente deux parois de raccordement 64, 65 inclinées. Les parois de raccordement tendent à former un V, éventuellement tronqué en étant dépourvu de la pointe du V. Chaque paroi de raccordement 64, 65 prolonge un flanc vertical 63.

Cette forme en V s'aplatit en s'éloignant de la zone d'emplanture Z1.

Ainsi, dans une première section Z2' proche de la zone d'emplanture Z1, les deux parois de raccordement sont contenues dans des plans séparés par un angle très aigu. Ces deux parois de raccordement peuvent ne pas se rejoindre et former un V tronqué.

Par contre, dans une deuxième section Z2" éloignée de la zone d'emplanture Z1, les deux parois de raccordement sont contenues dans des plans séparés par un angle obtus par exemple. Ce deux parois de raccordement peuvent alors se rejoindre en formant un V non tronqué.

Dans la zone courante Z3, chaque section présente deux parois courantes 66, 67 sensiblement horizontales qui prolongent respectivement les deux parois de raccordement 64, 65. Les deux parois courantes 66, 67 peuvent être accolés transversalement.

Pour matérialiser la surface de dépose, l'assise d'un moule peut comporter un siège 72 portant un noyau 71.

Dans la zone d'emplanture et la zone de raccordement, le noyau présente le fond, les parois d'emplanture et les parois de raccordement.

Par contre, le siège peut comporter les parois courantes par exemple.

Ce noyau peut être un noyau amovible désolidarisé du longeron à l'issue de sa fabrication.

A l'inverse, le noyau peut être inamovible en comprenant des éléments constitutifs de la pale.

Ainsi, le noyau peut comporter une douille de fixation 41, un coin d'emplanture 42 entourant la douille de fixation et un matériau de remplissage 43 du longeron.

Selon la réalisation de la figure 6, chaque moule présente dans la zone d'emplanture Z1 une paroi d'emplanture.

La paroi d'emplanture forme deux flancs 61, 63 verticaux accolés l'un à l'autre. Les flancs sont arqués pour entourer partiellement l'axe d'emplanture.

Dans la zone de raccordement Z2, chaque moule présente deux parois de raccordement 64, 65. Les parois de raccordement tendent à former un V, éventuellement tronqué en étant dépourvu de la pointe du V. Chaque paroi de raccordement prolonge un flanc horizontal.

Cette forme en V se redresse en s'éloignant de la zone d'emplanture Z1.

Dans la zone courante Z3, chaque section présente deux parois courantes 66, 67 sensiblement horizontales qui prolongent respectivement les deux parois de raccordement. Les deux parois courantes sont décalées transversalement.

Selon le procédé de fabrication, un opérateur fabrique les sous-ensembles du longeron les uns après les autres de la manière suivante.

Pour fabriquer l'écheveau d'un sous-ensemble, l'opérateur enlève les tiroirs du moule durant une étape de fabrication STP2.

Cet opérateur requiert alors le fonctionnement du robot 51.

En effet, l'absence de tiroirs permet à la tête placement de fibres de déposer les tronçons de ruban sur la surface de dépose du moule.

Ainsi, la tête de placement 53 de fibres enroule alors chaque tronçon de ruban du sous-ensemble autour d'un axe d'emplanture AX1, AX2 du moule en déposant ledit tronçon par-dessus la surface de dépose de ce moule.

Eventuellement, la tête de placement de fibres enroule chaque tronçon de ruban du sous-ensemble autour d'un axe vertical en décrivant un U. Cette tête de placement de fibres dépose alors un tronçon au dessus d'une première paroi courante, d'une première paroi de raccordement, de la paroi d'emplanture, d'une deuxième paroi de raccordement, et d'une deuxième paroi courante du moule.

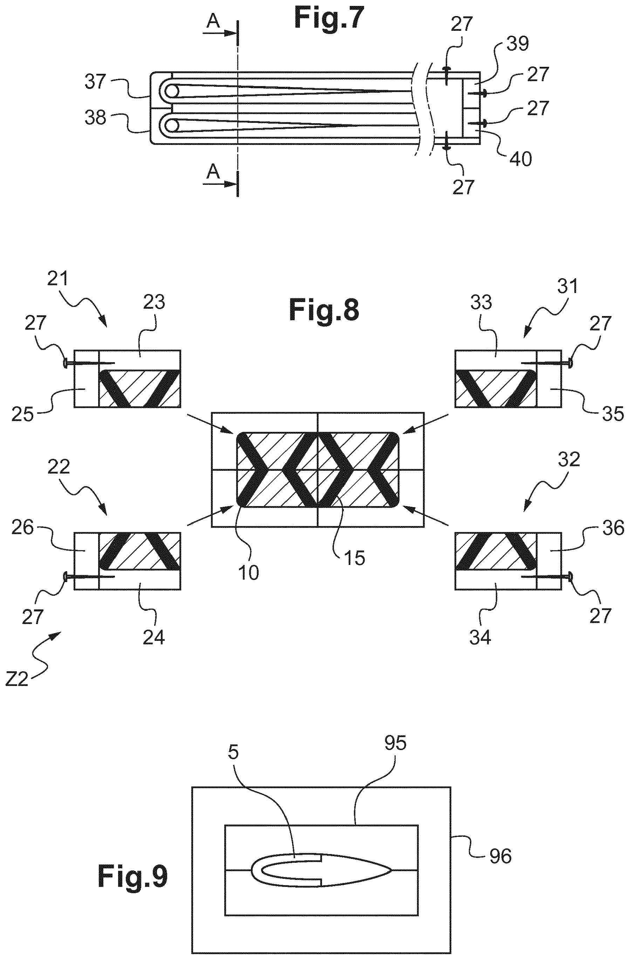

A l'issue de cette opération de dépose de tronçons de ruban et en référence à la figure 7, l'opérateur ferme alors le moule en agençant les tiroirs de ce moule. Par exemple, au moins un tiroir est solidarisé à une assise par des moyens de fixation réversibles 27, tels que des moyens de vissage ou d'encastrement notamment.

On note qu'un tiroir peut le cas échéant être commun à deux moules. Par exemple, un tiroir longitudinal obture partiellement deux moules distincts.

Eventuellement, des équipements internes du longeron sont insérés dans le moule. Ces équipements internes peuvent par exemple inclure des boitiers d'équilibrage statique et dynamique de la pale, ainsi que des boitiers, ou masses, d'adaptation dynamique, ainsi que des masses ou contrepoids de calage du centre de gravité en corde.

En référence à la figure 8, l'opérateur assemble en outre les moules les uns aux autres. A l'issue de cet assemblage, les moules forment un enceinte fermée dans laquelle sont maintenus les écheveaux longeron.

Par exemple, le moule d'intrados de bord d'attaque 22 est solidarisé au moule d'intrados de bord de fuite 32. De plus, le moule d'extrados de bord d'attaque 21 est latéralement solidarisé au moule d'extrados de bord de fuite 31.

En outre, le moule d'intrados de bord de fuite 32 est solidarisé en élévation au moule d'extrados de bord de fuite 31, le moule d'extrados de bord d'attaque 21 étant solidarisé en élévation au moule d'intrados de bord d'attaque 22.

Dès lors, le longeron est chauffé pour être polymérisé si la résine est de type thermodurcissable, ou pour être consolidé si la résine est de type thermoplastique.

Pour fabriquer la pale de la figure 1 et en référence à la figure 9, un opérateur fabrique en outre un moule d'ensemble 95 de la pale à fabriquer.

L'opérateur dispose alors le longeron 5 finalisé dans le moule d'ensemble 95.

Ce moule d'ensemble 95 est alors disposé dans un moyen de chauffage pour polymériser ou consolider la pale 1.

Ainsi, le procédé permet d'obtenir une pale munie d'au moins une douille de fixation et d'un longeron, ce longeron comportant un arrangement par d'une douille de fixation.

Conformément à la figure 2, chaque section dite « section d'emplanture » d'un arrangement dans la zone d'emplanture Z1 peut comporter au moins une tranche sensiblement rectangulaire s'étendant en élévation selon sa longueur. Notamment, l'arrangement comporte deux tranches parallèles l'une à l'autre et disposées de part et d'autre de la douille de fixation.

Conformément à la figure 3, chaque section dite « section de raccordement » dudit arrangement dans la zone de raccordement Z2 a une forme de X. Dès lors, un sous-ensemble d'intrados de l'arrangement a une forme de V retourné, un sous-ensemble d'extrados ayant une forme V dans cette section de raccordement.

Enfin et en référence à la figure 4, chaque section dite « section courante » dudit arrangement dans la zone courante Z3 comporte au moins une tranche s'étendant transversalement selon sa longueur.

Notamment, l'arrangement comporte deux tranches sensiblement horizontales qui sont accolées ou décalées en élévation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de fabrication d'un longeron (5) d'une pale (1) à l'aide de rubans (6) en matériaux composites, ledit longeron (5) comportant transversalement au moins un arrangement (10, 15), chaque arrangement (10, 15) étant à enrouler autour d'un axe d'emplanture (AX1, AX2),
**caractérisé en ce que** :
- durant une étape de préparation, on définit un moule d'intrados (22, 32) et un moule d'extrados (21, 31) par arrangement (10, 15) à fabriquer, chaque moule (21, 22, 31, 32) comprenant une assise (23, 24, 33, 34) s'étendant longitudinalement selon l'envergure dudit longeron et définissant une surface de dépose incluant :
∘ une zone d'emplanture (Z1) munie d'une paroi d'emplanture (61), ladite paroi d'emplanture formant deux flancs (63),
∘ une zone de raccordement (Z2) présentant deux parois de raccordement (64, 65) inclinées formant un V inversé et raccordées respectivement aux deux flancs,
∘ une zone courante (Z3) présentant deux parois courantes (66, 67) prolongeant respectivement les deux parois de raccordement (64, 65),
- durant une étape de fabrication, chaque arrangement (10, 15) étant subdivisé en un sous-ensemble d'intrados (11) et un sous-ensemble d'extrados (12) comprenant chacun un écheveau (8), chaque écheveau comprenant une pluralité de tronçons (7) de rubans en forme de U empilés les uns sur les autres, chaque moule (21, 22, 35, 36) comportant au moins un tiroir amovible dit « tiroir latéral » (25, 26, 35, 36) délimitant transversalement le moule (21, 22, 31, 32) en s'étendant verticalement à partir de l'assise (23, 24, 33, 34) et / ou au moins un tiroir amovible dit « tiroir longitudinal » (37, 38, 39, 40) délimitant longitudinalement ledit moule en s'étendant verticalement à partir de l'assise, :
∘ on enlève chaque tiroir (25, 26, 35, 36, 37, 38, 39, 40) de chaque moule (21, 22, 31, 32),
∘ on fabrique ledit sous-ensemble d'intrados (11) et ledit sous-ensemble d'extrados (12) d'un arrangement (10, 15) respectivement sur ledit moule d'intrados (22, 32) et ledit moule d'extrados (21, 31) correspondant à l'arrangement, chaque sous-ensemble étant fabriqué en empilant des tronçons (7) de ruban sur le moule correspondant par une méthode de placement de fibres à l'aide d'une tête de placement (53), ladite tête de placement (53) déposant ledit tronçon par-dessus la surface de dépose dudit moule,
∘ on ferme chaque moule (21, 22, 31, 32) en agençant chaque tiroir (25, 26, 35, 36, 37, 38, 39, 40) du moule (21, 22, 31, 32), et on accole lesdits moules (21, 22, 31, 32) pour former une enceinte fermée dans laquelle se trouvent les sous-ensembles,
- durant une étape de finalisation, on chauffe ledit longeron (5) au sein des moules accolés.

2. Procédé selon la revendication 1,
**caractérisé en ce qu'**au moins un moule comporte un noyau (71) amovible reposant sur un siège (72) dudit moule (21, 22, 31, 32) pour matérialiser au moins partiellement ladite assise.

3. Procédé selon l'une quelconque des revendications 1 à 2,
**caractérisé en ce qu'**au moins un moule (21, 22, 31, 32) comporte une assise munie d'un siège (72) et d'un noyau (71) inamovible du longeron, ledit noyau inamovible étant formé d'une douille de fixation (41), d'un coin d'emplanture (42) entourant ladite douille de fixation et d'un matériau de remplissage (43) du longeron.

4. Procédé selon l'une quelconque des revendications 1 à 3,
**caractérisé en ce que**, avant d'accoler lesdits moules (21, 22, 31, 32), on dispose dans au moins un moule (21, 22, 31, 32) au moins un équipement interne dudit longeron (5).

5. Procédé selon l'une quelconque des revendications 1 à 4,
**caractérisé en ce que** ledit longeron (5) comportant un arrangement dit « arrangement de bord de fuite (15) » et un arrangement dit « arrangement de bord d'attaque (10) »
- durant ladite étape de préparation (STP1), on définit un moule d'intrados de bord d'attaque (22) et un moule d'extrados de bord d'attaque (21) ainsi qu'un moule d'intrados de bord de fuite (32) et un moule d'extrados de bord de fuite (31),
- durant ladite étape de finalisation, on accole latéralement le moule d'intrados de bord d'attaque (22) au moule d'intrados de bord de fuite (32), on accole latéralement le moule d'extrados de bord d'attaque (21) au moule d'extrados de bord de fuite (31), on accole en élévation le moule d'extrados de bord de fuite (31) au moule d'intrados de bord de fuite (32), on accole en élévation le moule d'extrados de bord d'attaque (21) au moule d'intrados de bord d'attaque (22).

6. Procédé selon la revendication 1,
**caractérisé en ce que** ledit axe d'emplanture (AX1, AX2) étant un axe vertical sensiblement orthogonal à un plan d'extension en envergure (P1) dudit longeron (5), ladite forme en V s'aplatit en s'éloignant de ladite zone d'emplanture.

7. Procédé selon la revendication 1,
**caractérisé en ce que** ledit axe d'emplanture (AX1, AX2) étant un axe vertical sensiblement orthogonal à un plan d'extension en envergure (P1) dudit longeron (5), lors de la fabrication d'un sous-ensemble, ladite tête de placement (53) enroule chaque tronçon de ruban du sous-ensemble autour d'un axe d'emplanture (AX1, AX2) en déposant ledit tronçon par-dessus la surface de dépose dudit moule.

8. Procédé de fabrication d'une pale (1),
**caractérisé en ce que** :
- on fabrique un longeron (5) en appliquant le procédé selon l'une quelconque des revendications 1 à 7,
- on fabrique un moule d'ensemble (95) de ladite pale,
- on agence ledit longeron (5) dans ledit moule d'ensemble (95),
- on agence ledit moule d'ensemble (95) dans un moyen de chauffage (96) pour finaliser ladite pale (1) en la chauffant.

9. Pale (1) munie d'au moins un longeron comprenant des rubans en matériaux composites, ledit longeron (5) comportant un arrangement (10, 15) apte à être enroulé autour d'une douille de fixation, cet arrangement comprenant un sous-ensemble d'intrados et un sous-ensemble d'extrados, cet arrangement s'étendant en envergure en comprenant successivement une zone d'emplanture (Z1) au niveau de la douille de fixation, une zone de raccordement (Z2) puis une zone courante (Z3),
**caractérisée en ce que** chaque section dite « section de raccordement » dudit arrangement dans la zone de raccordement a une forme de X, ledit sous-ensemble d'intrados ayant une forme de V retourné et ledit sous-ensemble d'extrados ayant une forme de V dans ladite section de raccordement, ladite pale étant fabriquée en appliquant le procédé selon l'une quelconque des revendications 1 à 8.

10. Pale selon la revendication 9,
**caractérisée en ce que**, ledit axe d'emplanture étant un axe vertical sensiblement orthogonal à un plan d'extension en envergure (P1) du longeron, chaque section dite « section d'emplanture » dudit arrangement dans la zone d'emplanture comporte au moins une tranche rectangulaire s'étendant en élévation selon sa longueur.

11. Pale selon la revendication 10,
**caractérisée en ce que**, ledit axe d'emplanture étant un axe vertical sensiblement orthogonal à un plan d'extension en envergure (P1) du longeron, chaque section dite « section courante » dudit arrangement dans la zone courante comporte au moins une tranche s'étendant transversalement selon sa longueur.

## Patentansprüche

1. Verfahren zur Herstellung eines Längsträgers (5) eines Rotorblatts (1) mit Hilfe von Bändern (6) aus Verbundmaterialien, wobei der Längsträger (5) in Querrichtung mindestens eine Anordnung (10, 15) aufweist, wobei jede Anordnung (10, 15) um eine Achse (AX1, AX2) einer Rotorblattwurzel aufzurollen ist,
**dadurch gekennzeichnet, dass**:
- während eines Vorbereitungsschritts eine druckseitige Form (22, 32) und eine saugseitige Form (21, 31) pro herzustellender Anordnung (10, 15) definiert wird, wobei jede Form (21, 22, 31, 32) eine Grundplatte (23, 24, 33, 34) aufweist, die sich längs entlang der Spannweite des Längsträgers erstreckt, und eine Auflagefläche definiert, die umfasst:
∘ einen Rotorblattwurzelbereich (Z1) mit einer Wurzelwandung (61), wobei die Wurzelwandung zwei Flanken (63) bildet,
∘ einen Verbindungsbereich (Z2) mit zwei geneigten Verbindungswandungen (64, 65), die ein umgekehrtes V bilden und jeweils mit den zwei Flanken verbunden sind,
∘ einen fluchtenden Bereich (Z3) mit zwei fluchtenden Wandungen (66, 67), die jeweils die beiden Verbindungswandungen (64, 65) verlängern,
- während eines Herstellungsschrittes jede Anordnung (10, 15) in eine druckseitige Untergruppe (11) und eine saugseitige Untergruppe (12) unterteilt wird, die jede einen Strang (8) aufweist, wobei jeder Strang eine Mehrzahl von U-förmigen Bandabschnitten (7) aufweist, die aufeinandergestapelt sind, wobei jede Form (21, 22, 35, 36) mindestens ein "seitliches Einschubteil" genanntes abnehmbares Einschubteil (25, 26, 35, 36) aufweist, welches die Form (21, 22, 31, 32) in Querrichtung begrenzt, indem es sich ausgehend von der Grundplatte (23, 24, 33, 34) vertikal erstreckt und/oder mindestens ein "Längseinschubteil" genanntes abnehmbares Einschubteil (37, 38, 39, 40), das in Längsrichtung die Form begrenzt, indem es sich ausgehend von der Grundplatte vertikal erstreckt:
∘ jedes Einschubteil (25, 26, 35, 36, 37, 38, 39, 40) von jeder Form (21, 22, 31, 32) abgenommen wird,
∘ die druckseitige Untergruppe (11) und die saugseitige Untergruppe (12) einer Anordnung (10, 15) jeweils auf der druckseitigen Form (22, 32) und der saugseitigen Form (21, 31), die der Anordnung entspricht, hergestellt wird, wobei jede Untergruppe hergestellt wird durch Stapeln der Bandabschnitte (7) auf der entsprechenden Form durch ein Verfahren zur Anordnung von Fasern mit Hilfe eines Anordnungskopfes (53), wobei der Anordnungskopf (53) den Abschnitt über der Ablagefläche der Form ablegt,
∘ jede Form (21, 22, 31, 32) geschlossen wird, indem jedes Einschubteil (25, 26, 35, 36, 37, 38, 39, 40) der Form (21, 22, 31, 32) angeordnet wird, und die Formen (21, 22, 31, 32) aneinandergefügt werden, um eine geschlossene Kammer zu bilden, in der sich die Untergruppen befinden,
- während eines Beendigungsschritts der Längsträger (5) in den aneinandergefügten Formen erhitzt wird.

2. Verfahren nach Anspruch 1,
**dadurch gekennzeichnet, dass** mindestens eine Form einen abnehmbaren Kern (71) aufweist, der auf einem Sitz (72) der Form (21, 22, 31, 32) ruht, um mindestens teilweise die Grundplatte zu bilden.

3. Verfahren nach einem der Ansprüche 1 bis 2,
**dadurch gekennzeichnet, dass** mindestens eine Form (21, 22, 31, 32) eine Grundplatte aufweist mit einem Sitz (72) und einem Kern (71), die nicht von dem Längsträger lösbar sind, wobei der nicht lösbare Kern aus einer Befestigungshülse (41), einer Ecke der Rotorblattwurzel (42), die die Befestigungshülse umgibt, und einem Füllmaterial (43) des Längsträgers gebildet wird.

4. Verfahren nach einem der Ansprüche 1 bis 3,
**dadurch gekennzeichnet, dass** vor dem Aneinanderfügen der Formen (21, 22, 31, 32) in mindestens einer Form (21, 22, 31, 32) mindestens eine innere Ausrüstung des Längsträgers (5) angeordnet wird.

5. Verfahren nach einem der Ansprüche 1 bis 4,
**dadurch gekennzeichnet, dass** der Längsträger (5) eine "Hinterkantenanordnung (15)" genannte Anordnung und eine "Vorderkantenanordnung (10)" genannte Anordnung aufweist,
- während des Vorbereitungsschritts (STP1) eine druckseitige Vorderkantenform (22) und eine saugseitige Vorderkantenform (21) sowie eine druckseitige Hinterkantenform (32) und eine saugseitige Hinterkantenform (31) definiert werden,
- während des Beendigungsschrittes die druckseitige Vorderkantenform (22) an die druckseitige Hinterkantenform (32) seitlich angefügt wird, die saugseitige Vorderkantenform (21) an die saugseitige Hinterkantenform (31) seitlich angefügt wird, in Höhenrichtung die saugseitige Hinterkantenform (31) an die druckseitige Hinterkantenform (32) angefügt wird, in Höhenrichtung die saugseitige Vorderkantenform (21) an die druckseitige Vorderkantenform (22) angefügt wird.

6. Verfahren nach Anspruch 1,
**dadurch gekennzeichnet, dass** die Rotorblattwurzelachse (AX1, AX2) eine vertikale Achse ist, die im Wesentlichen senkrecht auf einer sich in Spannweitenrichtung (P1) des Längsträgers (5) erstreckenden Ebene steht, wobei die V-Form sich mit wachsender Entfernung von dem Wurzelbereich abflacht.

7. Verfahren nach Anspruch 1,
**dadurch gekennzeichnet, dass** die Rotorblattwurzelachse (AX1, AX2) eine vertikale Achse ist, die im Wesentlichen senkrecht auf einer sich in Spannweitenrichtung des Längsträgers (5) erstreckenden Ebene (P1) steht, wobei während der Herstellung einer Untergruppe der Ablagekopf (53) jeden Bandabschnitt der Untergruppe um eine Rotorblattwurzelachse (AX1, AX2) rollt, indem der Abschnitt über der Ablagefläche der Form abgelegt wird.

8. Verfahren zur Herstellung eines Rotorblatts (1),
**dadurch gekennzeichnet, dass**:
- ein Längsträger (5) hergestellt wird durch Anwendung des Verfahrens nach einem der Ansprüche 1 bis 7,
- eine Form (95) der Gesamtheit des Rotorblatts hergestellt wird,
- der Längsträger (5) in der Form der Gesamtheit (95) des Rotorblatts angeordnet wird,
- die Form der Gesamtheit (95) in einer Heizanlage (96) angeordnet wird, um das Rotorblatt (1) durch Aufheizen fertigzustellen.

9. Rotorblatt (1) mit mindestens einem Längsträger, der Bänder aus Verbundmaterialien aufweist, wobei der Längsträger (5) eine Anordnung (10, 15) aufweist, die um eine Befestigungshülse aufgerollt werden kann, wobei diese Anordnung eine druckseitige Untergruppe und eine saugseitige Untergruppe aufweist, wobei diese Anordnung sich in Spannweitenrichtung erstreckt und aufeinanderfolgend einen Rotorblattwurzelbereich (Z1) auf der Höhe der Befestigungshülse, einen Verbindungsbereich (Z2) und einen fluchtenden Bereich (Z3) aufweist,
**dadurch gekennzeichnet, dass** jeder "Verbindungsabschnitt" genannte Abschnitt der Anordnung in dem Verbindungsbereich X-förmig ist, wobei die druckseitige Untergruppe die Form eines umgekehrten Vs aufweist, und die saugseitige Untergruppe die Form eines Vs in dem Verbindungsabschnitt aufweist, wobei das Rotorblatt hergestellt wird durch Anwendung des Verfahrens nach einem der Ansprüche 1 bis 8.

10. Rotorblatt nach Anspruch 9,
**dadurch gekennzeichnet, dass** die Rotorblattwurzelachse eine vertikale Achse ist, die im Wesentlichen senkrecht auf einer sich in Spannweitenrichtung erstreckenden Ebene (P1) des Längsträgers steht, wobei jeder "Rotorblattwurzelabschnitt" genannte Abschnitt der Anordnung in dem Rotorblattwurzelbereich mindestens einen rechtwinkligen Abschnitt aufweist, der sich entlang seiner Länge nach oben erstreckt.

11. Rotorblatt nach Anspruch 10,
**dadurch gekennzeichnet, dass** die Rotorblattwurzelachse eine vertikale Achse ist, die senkrecht auf einer sich in Spannweitenrichtung des Längsträgers erstreckenden Ebene steht, wobei jeder "fluchtender Abschnitt" genannter Abschnitt der Anordnung in dem fluchtenden Bereich mindestens einen Abschnitt aufweist, der sich entlang seiner Länge quer erstreckt.

## Claims

1. Method of fabricating a spar (5) of a blade (1) with the aid of tapes (6) of composite materials, said spar (5) comprising transversely at least one arrangement (10, 15), each arrangement (10, 15) being for winding around a root axis (AX1, AX2),
**characterised in that**:
- during a preparation step, a lower-surface mould (22, 32) and a upper-surface mould (21, 31) for each arrangement (10, 15) to be fabricated are defined, each mould (21, 22, 31, 32) comprising a base (23, 24, 33, 34) extending longitudinally according to the span of said spar and defining a laying surface including:
∘ a root zone (Z1) provided with a root wall (61), said root wall (61) forming two flanks (63),
∘ a connection zone (Z2) having two inclined connection walls (64, 65) forming an inverted V and connected respectively to the two flanks,
∘ a running zone (Z3) having two running walls (66, 67) extending respectively the two connection walls (64, 65),
- during a fabrication step, each arrangement (10, 15) being subdivided into a lower-surface subassembly (11) and a upper-surface subassembly (12), each comprising a hank (8), each hank comprising a plurality of U-shaped tape segments (7) stacked on one another, each mould (21, 22, 35, 36) comprising at least one removable slide called "lateral slide" (25, 26, 35, 36) delimiting transversely the mould (21, 22, 31, 32) by extending vertically from the base (23, 24, 33, 34) and/or at least one removable slide called "longitudinal slide" (37, 38, 39, 40) delimiting longitudinally said mould by extending vertically from the base:
∘ each slide (25, 26, 35, 36, 37, 38, 39, 40) is removed from each mould (21, 22, 31, 32),
∘ said lower-surface subassembly (11) and said upper-surface subassembly (12) of an arrangement (10, 15) are respectively fabricated on said lower-surface mould (22, 32) and on said upper-surface mould (21, 31) corresponding to the arrangement, each subassembly being fabricated by stacking tape segments (7) on the corresponding mould by a method of placing fibres with the aid of a placement head (53), said placement head (53) laying said segment over the laying surface of said mould,
∘ each mould (21, 22, 31, 32) is closed by putting each slide (25, 26, 35, 36, 37, 38, 39, 40) of the mould (21, 22, 31, 32) into place, and said moulds (21, 22, 31, 32) are juxtaposed in order to form a closed enclosure in which the subassemblies are to be found,
- during a finalising step, said spar (5) within the juxtaposed moulds is heated.

2. Method according to claim 1,
**characterised in that** at least one mould comprises a removable core (71) resting on a seat (72) of said mould (21, 22, 31, 32) in order to embody said base at least partially.

3. Method according to any one of claims 1 to 2,
**characterised in that** at least one mould (21, 22, 31, 32) comprises a base provided with a seat (72) and a non-removable core (71) of the spar, said non-removable core being formed by a fastening bushing (41), by a root wedge (42) surrounding said fastening bushing and by a filling material (43) of the spar.

4. Method according to any one of claims 1 to 3,
**characterised in that**, prior to juxtaposing said moulds (21, 22, 31, 32), at least one piece of internal equipment of said spar (5) is placed in at least one mould (21, 22, 31, 32).

5. Method according to any one of claims 1 to 4,
**characterised in that** said spar (5) comprising an arrangement called "trailing-edge arrangement (15)" and an arrangement called "leading-edge arrangement (10)"
- during said preparation step (STP1), a leading-edge lower-surface mould (22) and a leading-edge upper-surface mould (21) as well as a trailing-edge lower-surface mould (32) and a trailing-edge upper-surface mould (31) are defined,
- during said finalising step, the leading-edge lower-surface mould (22) is juxtaposed laterally with the trailing-edge lower-surface mould (32), the leading-edge upper-surface mould (21) is juxtaposed laterally with the trailing-edge upper-surface mould (31), the trailing-edge upper-surface mould (31) is juxtaposed in elevation with the trailing-edge lower-surface mould (32), the leading-edge upper-surface mould (21) is juxtaposed in elevation with the leading-edge lower-surface mould (22).

6. Method according to claim 1,
**characterised in that** said root axis (AX1, AX2) being a vertical axis substantially orthogonal to a plane of extension in span (P1) of said spar (5), said V-shape flattens on going away from said root zone.

7. Method according to claim 1,
**characterised in that** said root axis (AX1, AX2) being a vertical axis substantially orthogonal to a plane of extension in span (P1) of said spar (5), during fabrication of a subassembly, said placement head (53) winds each tape segment of the subassembly around a root axis (AX1, AX2) by laying said segment on the laying surface of said mould.

8. Method of fabricating a blade (1),
**characterised in that**:
- a spar (5) is fabricated by applying the method according to any one of claims 1 to 7,
- an overall mould (95) for said blade is fabricated,
- said spar (5) is arranged in said overall mould (95),
- said overall mould (95) is arranged in a heating means (96) for finalising said blade (1) by heating it.

9. Blade (1) provided with at least one spar comprising tapes of composite materials, said spar (5) comprising an arrangement (10, 15) suitable for being wound around a fastening bushing, the arrangement comprising a lower-surface subassembly and a upper-surface subassembly, the arrangement extending in span comprising successively a root zone (Z1) at the fastening bushing, a connection zone (Z2) then a running zone (Z3),
**characterised in that** each section called "connection section" of said arrangement in the connection zone is X-shaped, said lower-surface subassembly having an upside-down V-shape and said upper-surface subassembly having a V-shape in said connection section, said blade being fabricated by applying the method according to any one of claims 1 to 8.

10. Blade according to claim 9,
**characterised in that**, said root axis being a vertical axis substantially orthogonal to a plane of extension in span (P1) of the spar, each section called "root section" of said arrangement in the root zone comprises at least one rectangular slab extending in elevation according to its length.

11. Blade according to claim 10,
**characterised in that**, said root axis being a vertical axis substantially orthogonal to a plane of extension in span (P1) of the spar, each section called "running section" of said arrangement in the running zone comprises at least one slab extending transversely according to its length.
